**Europäisches Patentamt**

**European Patent Office**

**Office européen des brevets**

(11) Veröffentlichungsnummer: **0 011 199 B1**

(12) **EUROPÄISCHE PATENTSCHRIFT**

(45) Veröffentlichungstag der Patentschrift:
06.01.82

(51) Int. Cl.³: **F 16 B 7/00**

(21) Anmeldenummer: **79104271.6**

(22) Anmeldetag: **02.11.79**

(54) Halteklemme.

(30) Priorität: **11.11.78 DE 7833633 U**

(43) Veröffentlichungstag der Anmeldung:
**28.05.80 Patentblatt 80/11**

(45) Bekanntmachung des Hinweises auf die Patenterteilung:
**06.01.82 Patentblatt 82/1**

(84) Benannte Vertragsstaaten:
**BE LU NL SE**

(56) Entgegenhaltungen:
**AT-B-198 732**
**DE-C-1 137 907**
**DE-C-859 091**
**DE-U-1 931 025**
**FR-A-2 146 556**
**GB-A-1 322 771**
**US-A-3 398 946**
**US-A-3 574 364**
**US-A-3 888 446**

(73) Patentinhaber: **Silbernagel, Hermann, Friesenheimer Strasse 7a, D-6800 Mannheim 1 (DE)**

(72) Erfinder: **Silbernagel, Hermann, Friesenheimer Strasse 7a, D-6800 Mannheim 1 (DE)**

(74) Vertreter: **Ratzel, Gerhard, Dr., Seckenheimer Strasse 36a, D-6800 Mannheim 1 (DE)**

BUNDESDRUCKEREI BERLIN

Halteklemme

Die Erfindung betrifft eine Halteklemme für Stangen, Rohre oder Profilleisten, die an einer anderen Profilleiste lösbar befestigt werden sollen; die Erfindung betrifft insbesondere die Halterung von Verkehrsschildern, die an Rohren befestigt insbesondere an Autobahn-Leitplanken montiert werden soll.

Solche Leitplanken haben sich auf Autobahnen und an bestimmten, herausgeschobenen Abschnitten anderer Straßen zur Verkehrssicherung eingebürgert. Sie dienen dazu, Fahrzeuge daran zu hindern, von der Fahrbahn abzukommen. Um Fahrzeuge, die von der Fahrbahn abkommen, elastisch aufzufangen, werden diese Leitplanken im allgemeinen mit einer bestimmten Neigung aufgestellt; die Neigung ist dabei so, daß der obere Teil der Leitplanke über den unteren Teil der Leitplanke übersteht. Ein Auto, welches auf eine solche Leitplanke prallt, muß daher erst die Leitplanke in die Senkrechte biegen, wobei schon ein Teil des Stoßes aufgefangen wird, bevor es die Leitplanke selbst verformt oder zerstört. Möchte man nun in der Nähe des Straßenrandes Schilder vorübergehend aufstellen, so bieten sich Leitplanken als Befestigungsmöglichkeit an. Das kommt daher, weil die Leitplanken schon stabil im Boden verankert sind; Schilder werden in herkömmlicher Weise ähnlich wie Leitplanken dadurch aufgestellt, daß sie mit einem kleinen Fundament im Boden verankert werden. Um sich nun für ein Schild ein separates Fundament zu ersparen, hat man bislang häufig Schilder an der Leitplanke direkt befestigt. Diese Methode bietet sich insbesondere dann an, wenn ein Schild z. B. an einer Baustelle nur vorübergehend aufgestellt werden soll. Die Schilder wurden dabei mit Laschen und/oder an sich bekannten Rohrbändern an den Leitplanken verschraubt. Hierbei ist es notwendig, für verschiedene Schildertypen insbesondere verschiedene Rohrbänder von jeweils passendem Innendurchmesser bereitzuhalten; auch Laschen verschiedener Stärke müssen für Schilder verschiedener Größe und Gewicht bereit gehalten werden. Laschen und Rohrbänder wurden mit den Leitplanken bislang dadurch verschraubt, daß in den Leitplanken Bohrungen eingebracht wurden.

Die hierbei auftretenden Nachteile sind offenkundig; so erfordert die Einbringung der Bohrlöcher in die Leitplanke komplizierte Werkzeuge, wie z. B. elektrische Bohrmaschinen. Gerade aber in unbewohnten Gegenden, wo kein elektrischer Strom zur Verfügung steht, lassen sich solche Bohrmaschinen nur umständlich einsetzen. Ein weiterer Nachteil besteht darin, daß für verschiedene Schilder verschiedene Laschen und Rohrbänder von den Monteuren mitgeführt werden müssen. Dabei ist ein zusätzliches Problem die Neigung der Leitplanken. Schilder müssen, anders als Leitplanken, senkrecht aufgestellt werden; das läßt sich nur dadurch erreichen, daß die Laschen verbogen werden. Biegbare Laschen sind jedoch nicht stabil, so daß die Aufstellungssicherheit der Verkehrsschilder leidet.

Als nächstkommender Stand der Technik ist die FR-A-2 146 556 zu nennen, die eine Spannklemme beschreibt, welche aus einem U-Profil-Eisen besteht, durch dessen Flansch in der Mitte eine Schraube geführt ist, wobei diese Schraube zum Festspannen von zwei sich kreuzenden innerhalb des U-Profil-Eisens, das entsprechende Durchbrechungen aufweist, liegende Bretter miteinander verspannt werden können.

Demgegenüber liegt der Erfindung die Aufgabe zugrunde, von den vorbeschriebenen Befestigungsmethoden für Verkehrsschilder grundsätzlich abzukommen, d. h. Bohrungen in der Leitplanke und die Bereithaltung einer Auswahl von Laschen und Rohrbändern zu vermeiden. Dennoch soll für die Verkehrsschilder eine Aufstellung gewährleistet sein, die mindestens ebenso stabil ist, wie es durch herkömmliche Methoden bekannt ist. Die Erfindung soll es ermöglichen, Verkehrsschilder ohne Zuhilfenahme komplizierter Werkzeuge, die sich zudem noch schwer betreiben lassen, wie z. B. Bohrmaschinen, zu vermeiden. Dadurch wird auch eine irreparable Schädigung der Leitplanken durch Bohrlöcher umgangen. Die Aufgabe wird erfindungsgemäß dadurch gelöst, daß eine solche Halteklemme, bestehend aus einem U-Profil-Eisen, durch dessen Flansch in der Mitte eine Schraube geführt ist, vorgeschlagen wird, die dadurch gekennzeichnet ist, daß das U-Profil-Eisen an seinen Schenkelenden zwei Rohrbänder trägt, deren eines einen Keil, dessen Spitze nach dem anderen Rohrband weist, in Langlochbohrungen lagert, die dem Rohrband freies Spiel lassen.

Die Schilder, die an Halterohren befestigt sind, werden an diesen Halterohren mit den Leitplanken durch die erfindungsgemäße Halteklemme verbunden. Die Wirkungsweise einer solchen Halteklemme ist ähnlich der einer vorbekannten Schraubzwinge. Der Unterschied zur Schraubzwinge besteht jedoch darin, daß die erfindungsgemäße Halteklemme nicht nur das Halterohr an die Leitplanke preßt, sondern auch eine Verdrehung dieser beiden Teile gegeneinander verhindert. Der Druck, durch den Halterohr und Leitplanke aneinandergepreßt werden, wird durch eine Schraube erzeugt; an dem einen Ende der Schraube ist zur Vereinfachung der Montage ein Hebel oder ein Hammerkopf angebracht, mit dessen Hilfe die Schraube von Hand leicht angezogen werden kann. Die Neigung der Leitplanke wird dadurch überwunden, daß die erfindungsgemäße Halteklemme einen Unterlegkeil trägt. Dieser Keil läßt sich verschieben und zwischen das Halterohr eines Verkehrsschildes und die Leitplanke so weit verschieben, wie es gerade notwendig ist, um das Verkehrsschild senkrecht aufzustellen.

Grundkörper der erfindungsgemäßen Halteklemme ist ein U-Profil. In der Mitte des Flansches des U-Profils ist eine Gewindebohrung eingebracht; durch diese Gewindebohrung wird die Schraube geführt. Die Schraube ist vorteilhafterweise als eine Hammerkopf-Schraube ausgebildet, die an ihrem anderen Ende eine Druckplatte trägt. Diese Druckplatte kann an der Schraube starr oder drehbar befestigt sein. An den Enden trägt das U-Profil Rohrbänder. Die Rohrbänder sind an den Schenkeln des U-Profils befestigt; normalerweise sind diese Rohrbänder an die Schenkel angeschweißt, sie können jedoch auch angeschraubt sein. Dir Die Rohrbänder schließen halbrund ab. Diese Ausbildung der Rohrbänder ist dann vorteilhaft, wenn die Verkehrsschilder an gewöhnlichen Rohren befestigt sind. Für den Fall, daß das Verkehrsschild an einem Vierkant-Rohr befestigt ist, sind Rohrbänder ratsam, die rechteckig abschließen. Das eine Rohrband trägt nun einen Keil; dieser Keil wird in dem Rohrband durch Langlöcher gelagert. Die Langlöcher weisen dabei ebenso wie die Keilspitze in Richtung des anderen Rohrbandes. Das Rohrband, das den Keil trägt, ist etwas länger als das andere Rohrband. In den Langlöchern läßt sich der Keil in seiner Länge zu dem anderen Rohrband hin oder von diesem weg verschieben. Er wirkt dadurch wie ein Unterlegklotz veränderlicher Dicke zwischen dem Halterohr eines Verkehrsschildes und der Leitplanke.

Die normale Verwendung der Halteklemme besteht also darin, zwischen die Leitplanke und das Halterohr des Verkehrsschildes den Keil zu schieben, um dadurch die Neigung der Leitplanke auszugleichen. da die Leitplanke üblicherweise oben nach vorne übergeneigt ist, muß der Keil normalerweise am unteren Teil der Leitplanke eingeschoben werden. Für den Fall, daß die Leitplanke jedoch unten vorgeneigt ist, läßt sich die erfindungsgemäße Halteklemme natürlich auch anders verwenden; in diesem Falle wird der Keil am oberen Teil der Leitplanke eingeschoben.

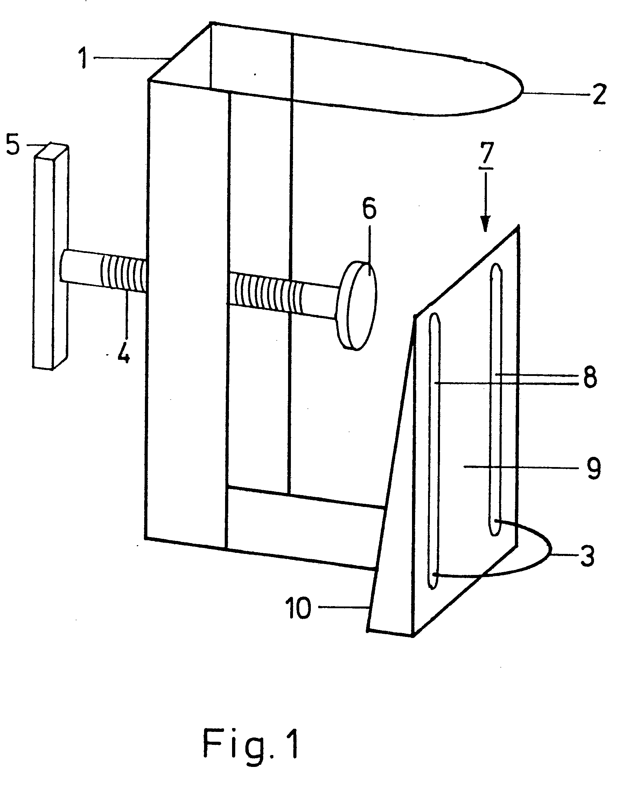

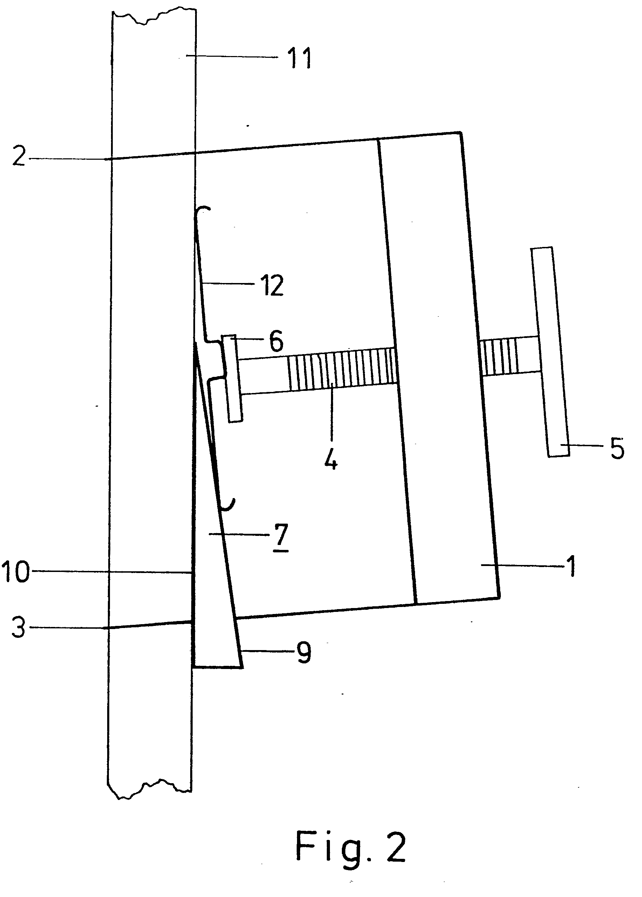

Die erfindungsgemäße Halteklemme ist in Abb. 1 dargestellt. In Abb. 2 ist eine typische Verwendung der Halteklemme gezeigt.

Zunächst soll auf die Abb. 1 eingegangen und die Erfindung beschrieben werden:

Das U-Profil (1) trägt an seinem oberen Ende das obere Rohrband (2); dieses Rohrband ist etwas kürzer als das untere Rohrband (3), welches analog an dem unteren Ende des U-Profils (1) befestigt ist. In der Mitte des Flansches des U-Profils (1) ist eine Schraube (4) durch eine Gewindebohrung, die von einem Schenkel des U-Profils verdeckt ist, durchgeführt. Die Schraube ist hierbei vorteilhafterweise als Hammerkopf-Schraube (5) ausgebildet; an dem zum Kopf der Schraube (4) entgegengesetzten Ende ist eine Druckplatte (6) befestigt; diese Druckplatte (6) kann an der Schraube (4) starr oder drehbar befestigt sein. In dem unteren Rohrband (3) ist der Keil (7) eingehängt. dazu sind längs des Keils (7) Langlöcher (8) eingebracht. Die Langlöcher (8) sind weit genug, dem Rohrband (3) freies Spiel zu lassen. Nach außen weist die Keilaußenseite (9), nach innen die Keilinnenseite (10). Der Keil (7) läßt sich in den Langlöchern (8) seiner Länge nach in dem unteren Rohrband (3) verschieben; die Keilspitze weist zum oberen Rohrband (2).

In Abb. 2 ist die typische Verwendung der erfindungsgemäßen Halteklemme zur Halterung eines Verkehrsschildes an einem Halterohr (11) dargestellt. Dieses Halterohr (11) soll an einer Leitplanke (12) befestigt werden; sie ist wie üblich oben leicht vorgeneigt. Sie wird durch die Druckplatte (6) der Schraube (4) gegen das Halterohr (11) des Verkehrsschildes bzw. den Keil (7) in dem unteren Rohrband gepreßt. Dabei wird das Halterohr (11) in den Rohrbändern (2, 3) bis zum äußeren Anschlag gedrückt. Unerheblich ist es hierbei, ob das Halterohr (11) rund ist oder ein Vierkant-Profil besitzt. Die Keilaußenseite (10) schließt das Halterohr (11) ein, während die Keilinnenseite (9) an der Leitplanke (12) anliegt. Der Keil (7) wirkt also wie eine Zwischenlegscheibe zwischen dem Halterohr (11) und der Leitplanke (12). Die Schraube (4) läßt sich an ihrem Hammerkopf (5) leicht von Hand festdrehen.

Stellt man Abb. 2 auf den Kopf, so hat man die Anwendung der erfindungsgemäßen Halteklemme für den Fall vor sich liegen, in dem die Leitplanke oben leicht nach hinten geneigt ist.

Dadurch, daß sich der Keil (7) in den Langlöchern (8) verschieben läßt, können mit seiner Hilfe beliebige Neigungen der Leitplanke (12) ausgeglichen werden, so daß das Schild an seinem Halterohr (11) senkrecht steht. Ebenso einfach, wie das Schild der erfindungsgemäßen Halteklemme montiert wurde, läßt es sich auch wieder von der Leitplanke lösen.

Zeichenerklärung

1) U-Profil
2) oberes Rohrband
3) unteres Rohrband
4) Schraube
5) Hammerkopf-Schraube
6) Druckplatte
7) Keil
8) Langloch
9) Keilaußenseite
10) Keilinnenseite
11) Halterohr
12) Leitplanke

**Patentanspruch**

Halteklemme, bestehend aus einem U-Profil-Eisen, durch dessen Flansch in der Mitte eine Schraube geführt ist, dadurch gekennzeichnet, daß das U-Profil-Eisen (1) an seinen Schenkelenden zwei Rohrbänder (2, 3) trägt, deren eines (3) einen Keil (7), dessen Spitze nach dem anderen Rohrband (2) weist, in Langlochbohrungen (8) lagert, die dem Rohrband (3) freies Spiel lassen.

## Claim

Holding Clamp, consisting of a U-section iron the flange of which has a threadbolt passing through its center; characterized by the following features: The U-section iron (1) has two tubular bands, one at each end of its legs (2, 3); one of which bands is provided with a wedge (7) the point of which ist directed towards the other tubular band (2); said wedge being housed in slot-shaped holes (8) allowing the tubular band (3) to move freely within said slots.

## Revendication

Dispositif de serrage, consistant d'un fer profilé en U dont la bride est percée par une vis suituée au centre de la bride; caractérisé par les détails suivants: Le fer profilé en U (1) est pourvu de deux bandes tubulaires (2, 3) situées chacune au bout de ses ailes, l'une des bandes (3) étant purvue d'une clavette (7) dont la point est dirigée vers l'autre bande tubulaire (2); la clavette étant logée dans des trous oblongs (8) laissant le mouvement libre à la bande tubulaire (3).

Fig. 1

Fig. 2